# EUROPÄISCHE PATENTSCHRIFT

(11) **EP 2 392 523 B1**
(45) Veröffentlichungstag und Bekanntmachung des Hinweises auf die Patenterteilung: **10.07.2013**
(21) Anmeldenummer: 11164640.2
(22) Anmeldetag: 03.05.2011
(51) Int. Cl.: B65G 1/02

(54) **Regal mit Zentrierungsrollen**
Shelf with centering rollers
Etagère dotée de rouleaux de centrage

(30) Priorität: 01.06.2010 DE 102010029566
(43) Veröffentlichungstag der Anmeldung: 07.12.2011
(73) Patentinhaber: BITO-Lagertechnik Bittmann GmbH, 55590 Meisenheim (DE)
(72) Erfinder: Kemperdick, Artur, 55758, Niederwörresbach (DE)
(74) Vertreter: Richardt Patentanwälte GbR

(56) Entgegenhaltungen:
- DE-U1- 9 407 522
- JP-A- 6 135 519
- JP-U- 50 120 182
- JP-U- 51 047 181
- JP-U- 51 057 484
- US-A- 4 304 521

## Beschreibung

Die Erfindung betrifft ein Regal mit Zentrierungsrollen nach dem Oberbegriff des Anspruchs 1.

Aus dem Stand der Technik sind verschiedene Vorrichtungen bekannt, mittels welcher Stückgut, beispielsweise Paletten, angeordnet, gelagert werden kann. So beschreibt beispielsweise die DE 38 40 648 A1 eine Ein-/Aus-Hochregallager-Einrichtung mit einer Mehrzahl von Regalkanälen in einer Ebene mit einer Mehrzahl von übereinander liegenden Ebenen von Kanälen mit zugeordneten Förderzeugen.

Allgemein sind Kanallager Regallager für Stückgut, bei denen ein Vielzahl von Ladeeinheiten hintereinander angeordnet in einzelnen Kanälen gelagert werden können. Um nun ein Umlagern, Einlagern oder Auslagern von Stückgut zu ermöglichen, kommt ein Umsetzgerät in Form eines Verteilerfahrzeugs zum Einsatz, welches auch als Shuttle, Kanalfahrzeug oder Satellitenfahrzeug bezeichnet wird. Das Verteilerfahrzeug ist dazu ausgebildet, Ladungsträger zu unterfahren, anzuheben und innerhalb des Kanals im angehobenen Zustand zu bewegen. So können Einlagerungen und Auslagerungen durch Verfahren der Ladungsträger im Kanal vorgenommen werden.

Allerdings besteht die Problematik, dass hierzu die Ladungsträger in genau vorbestimmter Weise auf entsprechenden Traversen, welche z.B. Tragschienen umfassen, angeordnet werden müssen. Dies wiederum stellt hohe Anforderungen an die Exaktheit, mittels welcher entsprechende Ladungsträger auf den Tragschienen beispielsweise mittels eines Gabelstaplers, platziert werden müssen. Eine solche Genauigkeit ist nur bei hohem Zeitaufwand erreichbar.

Aus JP 51 057484 U ist eine gattungsgemäße Halterung oder Führung für Gegenstände bekannt, wobei seitlich Rollen vorgesehen sind, zwischen denen die Gegenstände zu liegen kommen sollen.

Daher liegt der Erfindung die Aufgabe zugrunde, ein verbessertes Regal, eine Rolle für ein Regal und eine Konsole für ein Regal zu schaffen.

Die der Erfindung zugrunde liegenden Aufgaben werden jeweils mit den Merkmalen des Anspruchs 1 gelöst. Bevorzugte Ausführungsformen der Erfindung sind in den abhängigen Patentansprüchen angegeben.

Es wird ein Regal geschaffen, zumindest zwei einander gegenüberliegenden Tragschienen, wobei die Tragschienen eine Abstützfläche zur Abstützung und Lagerung von Ladungsträgern aufweisen.

Unter "Ladungsträger" werden beispielsweise Paletten oder verschiedenste Arten und Vorrichtungen verstanden, welche in der Lage sind, gewünschtes zu lagerndes Stückgut aufzunehmen bzw. abzustützen.

Den Tragschienen ist jeweils eine frei drehbare Rolle, auch als Zentrierrolle bezeichnet, zugeordnet, wobei sich die jeweilige Achse der jeweiligen Rolle parallel zur jeweiligen Tragschiene erstreckt. Dabei sind die Rollen zur Zentrierung der Ladungsträger auf den Tragschienen ausgebildet.

Ausführungsformen der Erfindung haben den Vorteil, dass im Falle dessen Ladungsträger nicht exakt auf den Tragschienen abgesetzt werden, eine automatische Zentrierung der Ladungsträger auf die Tragschienen stattfindet. Kommt beispielsweise ein Ladungsträger auf eine Kante einer der Rollen auf, wird diese Rolle dadurch in eine Rollbewegung versetzt. Durch diese Rollbewegung wird der Ladungsträger bezüglich der Traversen (Tragschienen) ausgerichtet und steht daraufhin gerade auf den Traversen auf.

Dies hat den besonderen Vorteil, dass Ladungsträger aus ihrer so gegebenen definierten Position beispielsweise durch eine Fördervorrichtung oder einen Roboter leicht aufgenommen werden kann, um so weiterbefördert zu werden. Dies kann beispielsweise unter Verwendung eines obig beschriebenen Verteilerfahrzeugs geschehen. Damit wird auch gewährleistet, dass der Ladungsträger mittig im Regal angeordnet wird.

Ferner enden gemäß der Erfindung die Schrägen auf einer Höhe in Richtung senkrecht zur Abstützfläche innerhalb des Radius der Rollen bezogen auf die Achsen der Rollen und außerdem enden die Schrägen auf einer Höhe in Richtung senkrecht zur Achse der Rollen und parallel zur Abstützfläche innerhalb des Radius der Rollen bezogen auf die Achsen der Rollen. In anderen Worten ist also am Regal bezüglich der Traversen, auf welche der Ladungsträger aufgestellt werden soll, links und rechts jeweils die Schräge ausgebildet, an deren unterem Abschluss sich die frei drehbare Rolle befindet. In Richtung zum Ladungsträger hin gesehen endet dabei die untere Kante der Schräge auf einer Höhe seitlich zum Ladungsträger hin und bezüglich der jeweiligen Achse versetzten Position. Damit ist gewährleistet, dass eine Gleitbewegung des Ladungsträgers zunächst entlang der Schräge und dann entlang der frei drehbaren Rolle zur endgültigen Ausrichtung des Ladungsträgers bezüglich der Traversen stattfindet.

Es sei angemerkt, dass sich die vorliegende Erfindung nicht nur für Kanallager eignet, sondern sich für eine Vielzahl verschiedenster Arten von Lagern verwenden lässt wie z.B. Fließlager, Durchlauflager oder Palettenregale.

Nach Ausführungsformen der Erfindung sind die Rollen in Richtung senkrecht zur Achse der Rollen seitlich versetzt von der Abstützfläche am Regal angeordnet. Vorzugsweise sind die Rollen hierbei so am Regal angeordnet, dass im abgestützten Zustand der Ladungsträger eine in Bezug auf das Regal senkrechte Abstützung ausschließlich durch die Tragschienen erfolgt. Damit dienen die Rollen lediglich zur Ausrichtung der Ladungsträger im Regal, sodass eine mechanische Belastung der Rollen nur beim Einlagern von entsprechenden Ladungsträgern im Regal stattfindet. Dadurch wird die mechanische Gesamtbelastung der Rollen erheblich reduziert, wodurch deren Lebensdauer signifikant erhöht wird.

Nach einer weiteren Ausführungsform der Erfindung weist das Regal ferner seitlich zu den Tragschienen angeordnete Schrägen auf, wobei die Schrägen zur Zentrierung der Ladungsträger auf den Tragschienen ausgebildet sind. Wenn also beim Abstellen eines Ladungsträgers auf den Traversen des Regals der Ladungsträger nicht exakt über den Traversen positioniert ist, so gleitet der Ladungsträger mit seiner seitlich vorstehenden Seite an einer der Schrägen entlang, bis diese Seite eine der Rollen erreicht, welche durch den vorbei gleitenden Ladungsträger in eine Rollbewegung versetzt wird. Hierdurch wird schließlich der Ladungsträger bezüglich der Traversen endgültig ausgerichtet und steht daraufhin dann gerade auf den Traversen auf.

Nach einer Ausführungsform der Erfindung sind die Schrägen so am Regal angeordnet, dass im abgestützten Zustand der Ladungsträger eine (in Bezug auf das Regal) senkrechte Abstützung ausschließlich durch die Tragschienen erfolgt. Auch hierdurch wird gewährleistet, dass die mechanische Haltbarkeit der Schrägen hoch ist, da eine mechanische Belastung der Schrägen durch die Ladungsträger ausschließlich beim Einlagern der Ladungsträger in das Regal erfolgt.

Nach einer weiteren Ausführungsform der Erfindung weist das Regal ferner Konsolen auf, wobei die Konsolen zur Lagerung der Rollen und/oder zur Fixierung der Schrägen an Rahmenverstrebungen des Regals ausgebildet sind. Vorzugsweise kommen hier Konsolen zum Einsatz, welche beispielsweise in die entsprechenden Rahmenverstrebungen des Regals eingehängt oder eingesperrt werden können, sodass hiermit eine einfache Montierbarkeit der Konsolen gewährleistet ist. Ferner kann durch die Verwendung von Konsolen eine einfache Möglichkeit geschaffen werden, die Rollen und die Schrägen der Rahmenverstrebungen am Regal anzuordnen.

Nach einer Ausführungsform der Erfindung sind die Konsolen ferner zur Fixierung der Tragschienen an den Rahmenverstrebungen des Regals ausgebildet. Vorzugsweise bestehen hierbei die Tragschienen aus einzelnen Segmenten, welche in die Konsolen eingehängt werden können. Dies ermöglicht zum einen eine einfache Montage der Tragschienen am Regal und zum anderen ein Austausch individueller Segmente von Tragschienen, beispielsweise bei deren Beschädigung oder Abnützung.

Nach einer weiteren Ausführungsform der Erfindung sind die Konsolen scheibenförmig ausgebildet, wodurch ein entsprechender Materialaufwand zur Verwendung der besagten Konsolen minimiert wird.

Nach einer weiteren Ausführungsform der Erfindung weisen die Konsolen eine Aussparung zur Aufnahme einer Achsaufhängung der Rollen auf. Damit ist wiederum gewährleistet, dass die Rollen in einfacher Weise in die Aussparung der Konsolen eingesteckt bzw. aus diesen Aussparungen wieder herausgenommen werden können. Dies ist insbesondere vor dem Hintergrund einer möglichen Reparatur von Rollen relevant, da diese abschnittsweise ohne Rücksichtnahme auf benachbarte Rollen aus den Konsolen entfernt werden und wieder in die Konsolen eingesetzt werden können. Außerdem vereinfacht dies die Montage eines entsprechenden Regals mit Rollen.

Nach einer weiteren Ausführungsform der Erfindung weisen die Konsolen ferner ein Abstützelement zur Abstützung der Schrägen auf. Auf die Schrägen in Richtung senkrecht zur Abstützfläche wirkende Kräfte werden damit teilweise durch die Konsolen aufgenommen, womit es möglich ist, dass die Schrägen unter minimiertem Materialeinsatz weitaus weniger mechanisch stabil ausgestaltet werden müssen, wie wenn dies der Fall wäre, wenn die Schrägen ausschließlich an Rahmenverstrebungen des Regals fixiert werden müssten.

In einem weiteren Aspekt betrifft die Erfindung eine Rolle für ein obig beschriebenes Regal.

In einem weiteren Aspekt betrifft die Erfindung eine Konsole für ein obig beschriebenes Regal.

Im Folgenden werden bevorzugte Ausführungsformen der Erfindung anhand der Zeichnungen näher erläutert. Es zeigen:
- Figur 1: eine schematische perspektivische Darstellung eines Regals,
- Figur 2: eine schematische Querschnittansicht eines Regals,
- Figur 3: eine schematische perspektivische Ansicht von Konsolen mit Rollen und Tragschienen,
- Figur 4: eine schematische Querschnittansicht einer Konsole.

Im Folgenden werden einander ähnliche Elemente mit den gleichen Bezugszeichen gekennzeichnet.

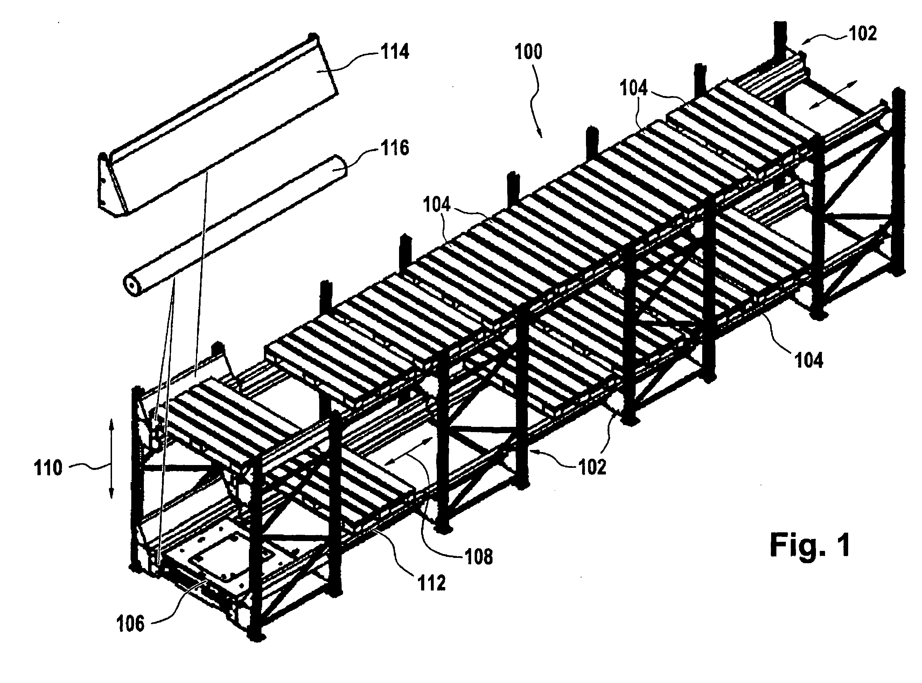

Die Figur 1 zeigt ein Regal 100 mit Tragschienen 112 zur Führung einer Fahrbewegung eines Verteilerfahrzeugs 106 in Richtung 108, also längs der Erstreckungsrichtung der Tragschienen 112.

In dem in Figur 1 gezeigten Regal 100 lagert eine Vielzahl von Ladungsträgern 104, im vorliegenden Fall Paletten, wobei die Tragschienen 112 auch zur Abstützung der Paletten dienen. Durch die Tragschienen werden also zwei Ebenen definiert - eine erste Ebene für die Führung der Bewegung des Verteilerfahrzeugs 106 und eine zweite darüber liegende Ebene zur Abstützung der Ladungsträger 104.

Das Verteilerfahrzeug 106 kann nun durch eine entsprechende Bewegung Richtung 108 längs der Tragschienen 112 unterhalb einer Palette 104 bewegt werden, woraufhin die Palette 104 durch das Verteilerfahrzeug angehoben werden kann in Richtung 110, um daraufhin innerhalb des Regals in Richtung 108 durch eine Bewegung des Verteilerfahrzeugs in Richtung 108 verfahren zu werden. Damit ist ein Umlagern der Paletten 104 mit deren in Figur 1 nicht ersichtlichem Stückgut möglich.

Ferner in Figur 1 ersichtlich sind Rahmenverstrebungen 102, durch welche in Verbindung mit den Tragschienen 112 ein stabiler Gesamtverbund des Regals 100 gebildet wird.

Um nun das Aufstellen einer Palette, zum Beispiel mittels eines Gabelstaplers, auf die Tragschienen zu vereinfachen, ist an den Tragschienen 112, auf welche die Palette 104 aufgestellt werden soll, links und rechts jeweils eine Schräge 114 ausgebildet, an den deren unterem Abschluss sich eine frei drehbare Rolle 116 befindet.

Wenn somit beim Abstellen der Palette 104 auf den Tragschienen 112 des Regals 100 der Gabelstapler die Palette nicht genau über den Tragschienen 112 positioniert, so gleitet die Palette mit ihrer seitlich vorstehenden Seite an einer der Kanten der Schräge 114 entlang, bis sie die Rolle 116 erreicht, welche durch die vorbeigleitende Palette 104 in eine Rollbewegung versetzt wird. Hierdurch wird die Palette 104 bezüglich der Tragschienen 112 ausgerichtet und steht dann gerade auf den Tragschienen 112 auf.

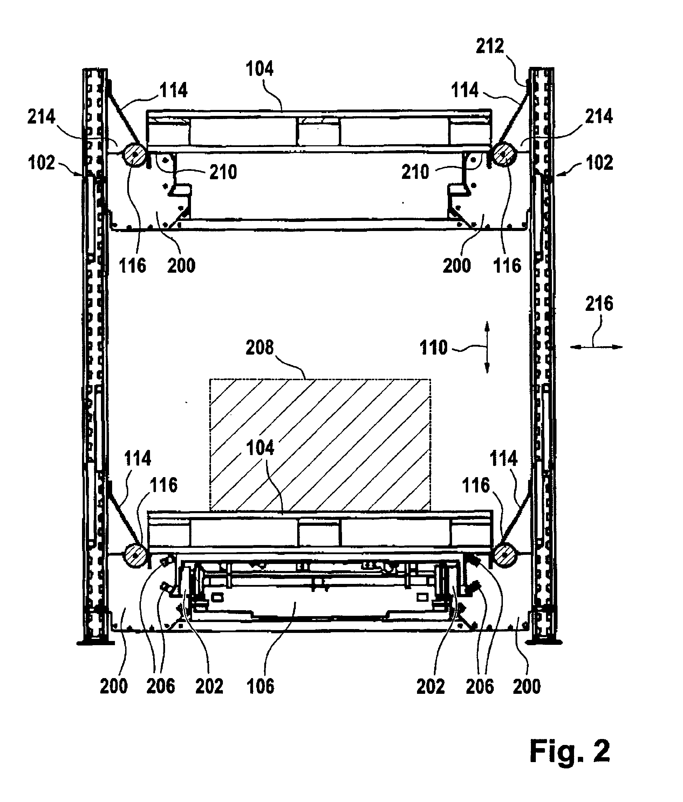

Die Figur 2 zeigt nun eine Querschnittansicht des Regals 100. Deutlich ersichtlich sind wiederum die senkrecht angeordneten Rahmenverstrebungen 102, in welchen Konsolen 200 fixiert sind. Diese Konsolen dienen der Aufnahme und Fixierung der Tragschienen 112. In der Ausführungsform der Figur 2 kommt den Tragschienen 112 dabei eine zweifache Funktion zugute. Dies ist zum einen die Lagerung der Paletten 104 mit ihrem Stückgut 208 als auch die Führung einer Fahrbewegung des Verteilerfahrzeugs 106 senkrecht zur Bewegungsebene des Verteilerfahrzeugs. Außerdem dienen die Tragschienen 112 im vorliegenden Fall zur seitlichen Führung des Verteilerfahrzeugs 106. Mit seinen Laufrädern 202 stützt sich das Verteilerfahrzeug 106 auf den Tragschienen 112 ab.

Die Tragschienen 112 sind beispielsweise über Winkelprofile 206 an den Konsolen 200 befestigt.

Zur Bewegung einer Palette 104 wird, wie obig beschrieben, das Verteilerfahrzeug 106 unter die Palette 104 verfahren, um daraufhin Richtung 110 angehoben zu werden, wodurch ein Anheben der Palette von der Tragschiene 112 erfolgt. Die Palette 104 kann zusammen mit dem Verteilerfahrzeug 106 entlang der Tragschiene 112 verfahren werden, woraufhin die Palette 104 daraufhin in einer gewünschten Position wieder auf den Tragschienen 112 abgestellt werden kann.

Ferner ersichtlich in Figur 2 sind wiederum die Schrägen 114, wobei die Schrägen 114 so am Regal bzw. an den Rahmenverstrebungen 102 des Regals angeordnet sind, dass im abgestützten Zustand der Ladungsträger (Palette) 104 eine senkrechte Abstützung ausschließlich durch die Tragschienen 112 erfährt - die Schrägen 114 berühren also im abgestellten Zustand die Palette 104 nicht.

Die Schrägen 114 sind zum einen an Montagepunkten 212 mit den Rahmenverstrebungen 102 des Regals verbunden. Beispielsweise sind hierzu die Schrägen mit den Rahmenverstrebungen verschraubt oder in diese eingehängt. Zur Erhöhung der Gesamtstabilität weisen zum anderen die Konsolen 200 ein Abstützelement zur Abstützung der Schrägen 114 auf. Unter "Abstützelement" wird dabei ein beliebiges Element verstanden, welches in der Lage ist, auf die Schrägen 114 wirkende Kräfte auf die Konsole 200 abzuleiten. Dies kann durch ein von der Konsole abstehendes Element realisiert sein, auf welches die Schräge 114 aufliegt. Möglich ist jedoch auch, dass an der Schräge ein abstehendes Element angeordnet ist, welches sich auf einer Fläche der Konsole 200 abstützt bzw. mit der Konsole 200 in mechanischer Verbindung steht. Eine mechanische Verbindung kann dabei über beliebige Befestigungsmittel wie Schrauben, Nieten oder Rastverbindungen realisiert sein.

Wie in Figur 2 ferner ersichtlich, enden die Schrägen 114 in Richtung 110 bezogen auf die Achsen der Rollen innerhalb des Radius der Rollen. Außerdem enden die Schrägen 114 in Richtung 216 ebenfalls bezogen auf die Achsen der Rollen innerhalb des Radius der Rollen 116.

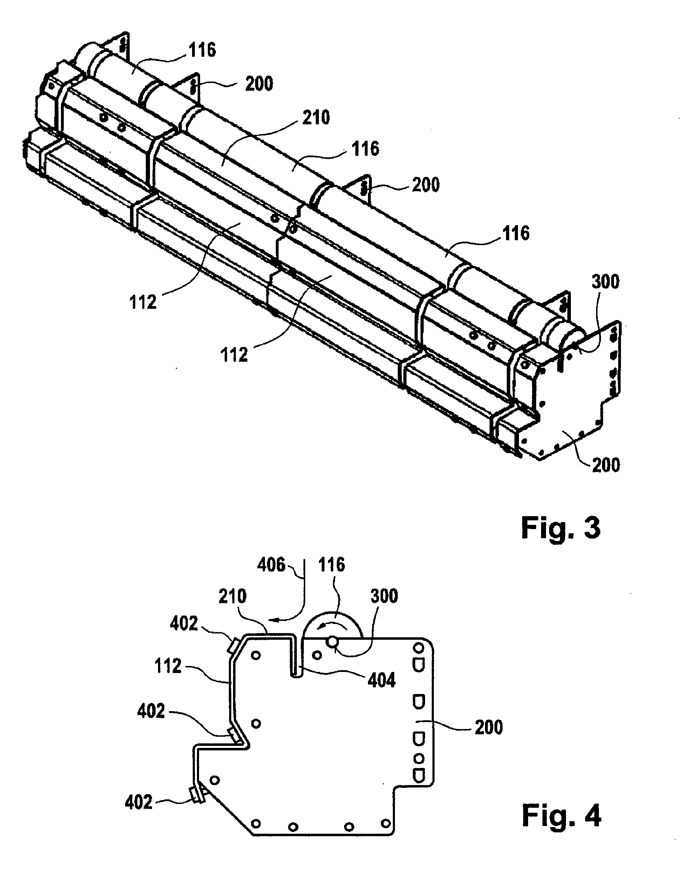

Die Figur 3 zeigt nun eine perspektivische Ansicht einer Anordnung von Konsolen 200 mit daran fixierten Tragschienen 112 und Rollen 116. Die Konsolen 200 sind scheibenförmig ausgebildet und weisen Aussparungen 300 zur Aufnahme einer Achsaufhängung der jeweiligen Rollen 116 auf. Dadurch können die Rollen 116 durch eine einfache senkrechte Bewegung in die Konsolen 200 eingesetzt werden.

Ferner ersichtlich in Figur 3 ist die Abstützfläche 210, welche durch die Tragschienen 112 gebildet wird. Diese Abstützfläche 210 dient zur Abstützung und Lagerung von in Figur 3 nicht näher ersichtlichen Paletten.

Die Tragschienen 112 sind segmentiert, wobei jeweils zwei aneinander grenzende Segmente durch eine gemeinsame Konsole 200 getragen bzw. abgestützt werden.

Die Figur 4 zeigt eine Querschnittansicht einer Konsole 200, wobei hier nun deutlich die Aussparung 300 zur Aufnahme der Achsaufhängung der Rolle 116 ersichtlich ist. Ferner gezeigt ist im Querschnitt ein einzelnes Segment einer Tragschiene 112, wobei die Tragschiene 112 an der Konsole unter Verwendung dreier Befestigungspunkte 402 fixiert ist. Beispielsweise kommt hier eine kraftschlüssige Fixierung der Tragschienen über Winkelprofile (vgl. Figur 2 Winkelprofil 206) zum Einsatz. Ferner vorgesehen ist eine Aussparung 404 der Konsole 200, in welcher ein Vorsprung der Tragschiene 112 eingesetzt ist. Damit ist eine hochstabile Anbindung der Tragschiene 112 an die Konsole 200 möglich.

Die Tragschiene 112 weist wiederum die Abstützfläche 210 zur Abstützung und Lagerung von Ladungsträgern auf.

Wird nun beim Abstellen eines Ladungsträgers auf der Fläche 210 dieser Ladungsträger nicht genau über der Fläche 210 positioniert, so gleitet der Ladungsträger mit seiner seitlich vorstehenden Seite auf die Rolle 116, welche daraufhin in eine Drehbewegung gerät, wodurch insgesamt der Ladungsträger eine Bewegung in Richtung 406 in geführter Weise durchläuft. Dadurch wird der Ladungsträger auf der Fläche 210 ausgerichtet - es erfolgt eine optimale Platzierung des Ladungsträgers im Regal.

### Bezugszeichenliste

- 100: Regal
- 102: Rahmenverstrebung
- 104: Palette
- 106: Verteilerfahrzeug
- 108: Richtung
- 110: Richtung
- 112: Laufschiene
- 114: Schräge
- 116: Rolle
- 200: Konsole
- 202: Rad
- 206: Winkelprofil
- 208: Stückgut
- 210: Abstützfläche
- 212: Anbindung
- 214: Abstützelement
- 216: Richtung
- 300: Aussparung
- 402: Befestigungspunkt
- 404: Aussparung
- 406: Richtung

## Patentansprüche

1. Regal (100) mit zumindest zwei einander gegenüber liegenden Tragschienen (112), wobei die Tragschienen (112) eine Abstützfläche (210) zur Abstützung und Lagerung von Ladungsträgern (104), wobei den Tragschienen (112) jeweils eine frei drehbare Rolle (116) zugeordnet ist, wobei sich die Achse der Rolle (116) parallel zur jeweiligen Tragschiene (112) erstreckt, **dadurch gekennzeichnet, daß** die Rollen (116) sich jeweils an den unteren Abschlüssen von seitlich an den Tragschienen vorgesehenen Schrägen (114) befinden, wobei die Schrägen in Richtung (110) senkrecht zur Abstützfläche (210) innerhalb des Radius der Rollen (116) bezogen auf die Achsen der Rollen (116) enden und wobei die Schrägen (114) auf einer Höhe in Richtung (216) senkrecht zur Achsen der Rollen (116) und parallel zur Abstützfläche (210) innerhalb des Radius der Rollen (116) bezogen auf die Achsen der Rollen (116) enden.

2. Regal (100) nach Anspruch 1, wobei die Rollen (116) in Richtung (216) senkrecht zur Achse der Rolle (116) seitlich versetzt von der Abstützfläche (210) am Regal (100) angeordnet sind.

3. Regal (100) nach Anspruch 2, wobei die Rollen (116) so am Regal (100) angeordnet sind, dass im abgestützten Zustand der Ladungsträger (104) eine senkrechte Abstützung ausschließlich durch die Tragschienen (112) erfolgt.

4. Regal (100) nach Anspruch 1, wobei die Schrägen (114) so am Regal (100) angeordnet sind, dass im abgestützten Zustand der Ladungsträger (104) eine senkrechte Abstützung ausschließlich durch die Tragschienen (112) erfolgt.

5. Regal (100) nach einem der vorigen Ansprüche 1 bis 4, ferner mit Konsolen (200), wobei die Konsolen (200) zur Lagerung der Rollen (116) und/oder zur Fixierung der Schrägen (114) an Rahmenverstrebungen (102) des Regals ausgebildet sind.

6. Regal (100) nach Anspruch 5, wobei die Konsolen (200) ferner zur Fixierung der Tragschienen (112) an den Rahmenverstrebungen (102) des Regals ausgebildet sind.

7. Regal (100) nach Anspruch 5 oder 6, wobei die Konsolen (200) scheibenförmig ausgebildet sind.

8. Regal (100) nach einem der vorigen Ansprüche 5 bis 7, wobei die Konsolen (200) eine Aussparung (300) zur Aufnahme einer Achsaufhängung der Rollen (116) aufweisen.

9. Regal nach einem der vorigen Ansprüche 5 bis 8, wobei die Konsolen ein Abstützelement (214) zur Abstützung der Schrägen (114) aufweisen.

## Claims

1. Shelf (100) comprising at least two mounting rails (112) which face each other, the mounting rails (112) forming a support surface (210) for supporting and bearing charge carriers (104), a freely rotatable roller (116) being assigned to each of the mounting rails (112), the axle of the roller (116) extending parallel to each mounting rail (112), **characterised in that** the rollers (116) are each located on the lower parts of chamfered members (114) which are provided at the sides of the mounting rails, the chamfered members ending in the direction (110) perpendicular to the support surface (210) within the radius of the rollers (116) in relation to the axles of the rollers (116), and the chamfered members (114) ending at a level in the direction (216) perpendicular to the axles of the rollers (116) and parallel to the support surface (210) within the radius of the rollers (116) in relation to the axles of the rollers (116).

2. Shelf (100) according to claim 1, wherein the rollers (116) are arranged in the direction (216) perpendicular to the axle of the roller (116) such that they are laterally offset from the support surface (210) on the shelf (100).

3. Shelf (100) according to claim 2, wherein the rollers (116) are arranged on the shelf (100) such that perpendicular support is provided exclusively by means of the mounting rails (112) when the charge carrier (104) is supported.

4. Shelf (100) according to claim 1, wherein the chamfered members (114) are arranged on the shelf (100) such that perpendicular support is provided exclusively by means of the mounting rails (112) when the charge carrier (104) is supported.

5. Shelf (100) according to any of the preceding claims 1 to 4, further comprising support panels (200), wherein the support panels (200) are configured to bear the rollers (116) and/or to fix the chamfered members (114) on frame struts (102) of the shelf.

6. Shelf (100) according to claim 5, wherein the support panels (200) are further configured to fix the mounting rails (112) on the frame struts (102) of the shelf.

7. Shelf (100) according to either claim 5 or claim 6, wherein the support panels (200) have a plate-shaped configuration.

8. Shelf (100) according to any of the preceding claims 5 to 7, wherein the support panels (200) comprise a recess (300) for receiving an axle suspension of the rollers (116).

9. Shelf (100) according to any of the preceding claims 5 to 8, wherein the support panels comprise a support element (214) for supporting the chamfered members (114).

## Revendications

1. Rayonnage (100) avec au moins deux rails porteurs (112) en face l'un de l'autre, les rails porteurs (112) comportant une surface de soutien (210) pour soutenir et loger des supports de charges (104), un rouleau (116) qui tourne librement étant associé à chaque fois aux rails porteurs (112), l'axe du rouleau (116) s'étendant parallèlement au rail porteur respectif (112), **caractérisé en ce que** les rouleaux (116) se trouvent à chaque fois aux extrémités inférieures de plans inclinés (114) prévus latéralement sur les rails porteurs, les plans inclinés se terminant, dans une direction (110) perpendiculaire à la surface de soutien (210), à l'intérieur du rayon des rouleaux (116) par rapport aux axes des rouleaux (116) et les plans inclinés (114) se terminant à une hauteur, dans une direction (216) perpendiculaire aux axes des rouleaux (116) et parallèle à la surface de soutien (110), à l'intérieur du rayon des rouleaux (116) par rapport aux axes des rouleaux (116).

2. Rayonnage (100) selon la revendication 1, les rouleaux (116) étant disposés sur le rayonnage (100), dans une direction (216) perpendiculaire à l'axe du rouleau (116), avec un décalage latéral par rapport à la surface de soutien (210).

3. Rayonnage (100) selon la revendication 2, les rouleaux (116) étant disposés de telle sorte sur le rayonnage (100) que, lorsque les supports de charges (104) sont soutenus, un soutien perpendiculaire s'effectue exclusivement avec les rails porteurs (112).

4. Rayonnage (100) selon la revendication 1, les plans inclinés (114) étant disposés de telle sorte sur le rayonnage (100) que, lorsque les supports de charges (104) sont soutenus, un soutien perpendiculaire s'effectue exclusivement avec les rails porteurs (112).

5. Rayonnage (100) selon l'une des revendications précédentes 1 à 4, en outre avec des consoles (200), les consoles (200) étant conçues pour loger les rouleaux (116) et/ou pour fixer les plans inclinés (114) sur des montants de cadre (102) du rayonnage.

6. Rayonnage (100) selon la revendication 5, les consoles (200) étant conçues en outre pour fixer les rails porteurs (112) sur les montants de cadre (102) du rayonnage.

7. Rayonnage (100) selon la revendication 5 ou 6, les consoles (200) étant conçues en forme de disques.

8. Rayonnage (100) selon l'une des revendications précédentes 5 à 7, les consoles (200) comportant un évidement (300) pour recevoir une suspension d'axe des rouleaux (116).

9. Rayonnage (100) selon l'une des revendications précédentes 5 à 8, les consoles (200) comportant un élément de soutien (214) pour soutenir les plans inclinés (114).
